# EUROPÄISCHE PATENTSCHRIFT

(11) **EP 3 838 832 B1**
(45) Veröffentlichungstag und Bekanntmachung des Hinweises auf die Patenterteilung: **14.09.2022**
(21) Anmeldenummer: 20207425.8
(22) Anmeldetag: 13.11.2020
(51) Int. Cl.: B66F 9/075, B60P 7/08, B60P 7/135

(54) **VORRICHTUNG ZUR FIXIERUNG EINES HUBWAGENS UND FAHRZEUG MIT EINER DERARTIGEN VORRICHTUNG**
DEVICE FOR FIXING A LIFT TRUCK AND VEHICLE WITH SUCH A DEVICE
DISPOSITIF DE FIXATION D'UN CHARIOT ÉLÉVATEUR À PLATE-FORME ET VÉHICULE DOTÉ D'UN TEL DISPOSITIF

(30) Priorität: 28.11.2019 DE 202019004858 U; 09.09.2020 DE 102020123523
(43) Veröffentlichungstag der Anmeldung: 23.06.2021
(73) Patentinhaber: Schliefer, Thomas, 51647 Gummersbach (DE)
(72) Erfinder: Schliefer, Thomas, 51647 Gummersbach (DE)
(74) Vertreter: Kutzenberger Wolff & Partner

(56) Entgegenhaltungen:
- DE-U1-202013 002 435
- FR-A1- 2 897 027
- GB-A- 2 440 676
- JP-A- S 522 948
- NL-C2- 1 001 917

## Beschreibung

### Stand der Technik

Die vorliegende Erfindung betrifft eine Vorrichtung zur Fixierung eines mindestens zwei Gabelzinken aufweisenden Hubwagens. Derartige Hubwagen können als Handhubwagen oder elektrische Hubwagen (Elektroameisen) ausgebildet sein. Ferner betrifft die Erfindung ein Fahrzeug, insbesondere einen Lastkraftwagen, mit einer Ladefläche und einer an der Ladefläche angeordneten Vorrichtung zur Fixierung eines Hubwagens.

Hubwagen und Elektroameisen werden auf Ladeflächen von LKW gewöhnlicherweise mit Gurten von außen gesichert. Dieser Vorgang ist in den meisten Fällen jedoch sehr zeitaufwändig und arbeitsintensiv und wird daher von den meisten Fahrer falsch oder überhaupt nicht durchgeführt. Daneben gibt es weiterhin die Möglichkeit, das Wegrollen von Hubwagen auf LKW durch das Anbringen von Wegfahrsperren zu sichern um transportsicher zu transportieren. Eine Vorrichtung gemäß dem Oberbegriff des Anspruchs 1 ist aus FR 2 897 027 A1 bekannt.

### Offenbarung der Erfindung

Die Aufgabe der vorliegenden Erfindung ist es, das Fixieren eines Hubwagens mit wenigen Handgriffen zu ermöglichen.

Zur **Lösung** der Aufgabe wird eine Vorrichtung zur Fixierung eines mindestens zwei Gabelzinken aufweisenden Hubwagens vorgeschlagen
mit einer Plattform und
mit einem Klemmelement zur Beaufschlagung der Gabelzinken des Hubwagens mit einer Druckkraft in Richtung der Plattform,
wobei die Plattform eine erste Hülse, insbesondere einer Steckhülse, zur Führung des Klemmelements aufweist,
und mit einer ersten Verzurreinrichtung, insbesondere einer Gurtknarre, zum Verzurren des Klemmelements an der Plattform.

Die erfindungsgemäße Vorrichtung ist sowohl arbeitssparender als eine herkömmliche Gurtsicherung als auch sicherer als eine Sicherung mit einem Wegfahrblock. Zum Fixieren des Hubwagens kann dieser auf die mit der ersten Hülse ausgestattete Plattform gefahren werden. Die Gabelzinken des Hubwagens können derart angeordnet werden, dass sich die erste Hülse der Plattform im Bereich zwischen den beiden Gabelzinken befindet. In die erste Hülse kann dann das Klemmelement eingelassen werden, um die Gabelzinken des Hubwagens durch das Klemmelement mit einer Kraft zu Beaufschlagen, die in Richtung der Plattform gerichtet ist und die Gabelzinken zwischen dem Klemmelement und der Plattform einklemmt. Ein Teil der Kraft wird durch die Gewichtskraft des Klemmelements verursacht, welches bevorzugt aus einem Metall ausgestaltet ist. Ein weiterer Teil der auf die Gabelzinken wirkenden Kraft kann durch die erste Verzurreinrichtung bereitgestellt werden, durch welche das Klemmelement an der Plattform verzurrt werden kann. Durch die erfindungsgemäße Vorrichtung wird es möglich, einen Hubwagen mit wenigen Handgriffen sicher zu fixieren. Folglich kann ein Schutz für Personen, das Fahrzeug und das Ladegut ermöglicht werden, wobei die Arbeit des Fahrers vereinfacht und die erforderliche Zeit zum Sichern des Hubwagens reduziert wird.

Die erste Hülse der Plattform ist bevorzugt als Steckhülse, beispielsweise als quadratische oder runde Steckhülse ausgebildet. Bevorzugt ist ein Querschnitt der ersten Hülse an einen Querschnitt eines Teils der Klemmelements angepasst, der in die Hülse eingebracht wird. Die Plattform mit der ersten Hülse ist bevorzugt derart ausgebildet, dass diese als Teil einer Ladefläche eines Fahrzeugs, beispielsweise eine Lastkraftwagens, angeordnet werden kann. Die erste Hülse kann nach untenn aus der Ladefläche hervorstehen.

Die erste Verzurreinrichtung kann als Zurrgurt mit einer Ratsche, insbesondere als Gurtknarre, ausgebildet sein. Ein erstes Ende der ersten Verzurreinrichtung kann fest mit dem Klemmelement verbunden sein. Ein zweites Ende der ersten Verzurreinrichtung ist bevorzugt lösbar mit der Plattform verbindbar, beispielsweise über einen Sicherungsstift oder einen Sicherungshaken, der in eine Öffnung an der Plattform, insbesondere der Hülse, eingebracht werden kann. Das zweite Ende der ersten Verzurreinrichtung kann nach dem Einbringen der Gabelzinken zwischen das Klemmelement und die Plattform mit der Plattform verbunden werden, um das Klemmelement an der der Plattform zu verzurren.

Die erfindungsgemäße Vorrichtung ist geeignet zum Fixieren von Hubwagen, insbesondere Handhubwagen und elektrischen Hubwagen, die auch als Elektroameisen bezeichnet werden. Diese Hubwagen weisen bevorzugt genau zwei Gabelzinken auf. Die Gabelzinken des Hubwagens können auch als Arme bezeichnet werden.

Gemäß einer vorteilhaften Ausgestaltung der Erfindung ist vorgesehen, dass das Klemmelement als Kreuzgebilde oder als Doppelkreuz ausgestaltet ist.

Vorteilhaft ist es, wenn das Klemmelement einen ersten Längsbalken zum Einbringen in die erste Hülse der Plattform und einen senkrecht zu dem ersten Längsbalken und fest mit dem ersten Längsbalken verbundenen ersten Querbalken mit einer Anlagefläche für die Gabelzinken des Hubwagens umfasst. Vorteilhaft ist eine Ausgestaltung, bei der Längs- und Querbalken aus einem Metall, beispielsweise einem Stahl, gefertigt sind. Längs- und Querbalken sind bevorzugt stoffschlüssig miteinander verbunden, insbesondere miteinander verschweißt.

Als besonders vorteilhaft hat sich eine Ausgestaltung erwiesen, bei welcher der erste Querbalken mindestens einen, bevorzugt zwei, Anschläge für die Gabelzinken des Hubwagens aufweist. Die Anschläge sind bevorzugt derart an dem ersten Querbalken angeordnet, dass sie in einen Zwischenraum zwischen den Gabelzinken eingreifen, wenn der Querbalken auf einem Hubwagen aufliegt, um diesen zu fixieren. Durch die Anschläge kann eine möglichst rechtwinklige Anordnung der Gabelzinken in Bezug auf den Querbalken erzwungen werden. Eine zu starke Schrägstellung der Gabelzinken gegenüber dem Querbalken wird verhindert.

Gemäß einer vorteilhaften Ausgestaltung ist vorgesehen, dass das Klemmelement einen senkrecht zu dem ersten Längsbalken und fest mit dem ersten Längsbalken verbundenen zweiten Querbalken umfasst, wobei der zweite Querbalken bevorzugt oberhalb des ersten Querbalkens an dem ersten Längsbalken angeordnet ist. Zum einen kann durch den zweiten Querbalken eine weitere Anlagefläche für einen Aufbau oder einen nach oben verschwenkten Griff des Hubwagens bereitgestellt werden. Dies Anlagefläche kann optional durch an dem zweiten Querbalken angeordnete Distanzstücke, beispielsweise aus Gummi, bereitgestellt werden. Zum anderen kann der zweite Querbalken zum Fixieren des Hubwagens verwendet werden.

In diesem Zusammenhang ist es bevorzugt, wenn an dem zweiten Querbalken eine zweite Verzurreinrichtung zum Verzurren des Hubwagens an dem zweiten Querbalken angeordnet ist. Die zweite Verzurreinrichtung kann als Zurrgurt mit einer Ratsche, insbesondere als Gurtknarre, ausgebildet sein. Die zweite Verzurreinrichtung kann fest mit dem zweiten Querbalken verbunden sein und eine Schlaufe aufweisen, die einen Aufbau und/oder einen nach oben verschwenkten Griff des Hubwagens umschlingen kann. Die zweite Verzurreinrichtung kann nach dem Einbringen des Aufbaus und/oder Griffs in die Schlaufe genutzt werden, um den Aufbau und/oder den Griff an dem Klemmelement zu verzurren.

Gemäß einer vorteilhaften Ausgestaltung umfasst das Klemmelement einen zweiten Längsbalken, der fest mit dem ersten Querbalken und dem ggf. vorhandenen zweiten Querbalken verbunden ist. Besonders vorteilhaft ist es, wenn das Klemmelement einen dritten Längsbalken aufweist, der fest mit dem ersten Querbalken und dem ggf. vorhandenen zweiten Querbalken verbunden ist. Durch den zweiten und ggf. dritten Längsbalken des Klemmelements kann die Stabilität des Klemmelements erhöht werden, was insbesondere zum Fixieren massiverer elektrischer Hubwagen vorteilhaft ist. Zudem kann der zweite und ggf. dritte Längsbalken von einer weiteren Verzurreinrichtung der Vorrichtung umschlungen werden, um einen Aufbau und/oder einen nach oben verschwenkten Griff eines Hubwagens an dem Halteelement zu verzurren.

Bevorzugt umfasst die Plattform eine zweite Hülse zum Einbringen des zweiten Längsbalkens. Besonders bevorzugt umfasst die Plattform eine dritte Hülse zum Einbringen des dritten Längsbalkens. Durch die zweite und ggf. dritte Hülse kann eine Verbindung zwischen Plattform und Klemmelement an mehreren Punkten, insbesondere zwei oder drei Punkten ermöglicht werden. Die zweite und ggf. dritte Hülse der Plattform ist bevorzugt als Steckhülse, beispielsweise als quadratische oder runde Steckhülse ausgebildet. Bevorzugt ist ein Querschnitt der zweiten Hülse an einen Querschnitt desjenigen Längsbalkens angepasst, der in die jeweilige Hülse eingebracht wird.

Gemäß einer vorteilhaften Ausgestaltung der Erfindung weist die eine unterhalb der Plattform separat von der Plattform anordbare Zusatzhalterung mit einer Zusatzhülse zum Einbringen des ersten Längsbalkens auf. Durch die Zusatzhalterung kann der Halt des Klemmelements in seinem in die erste Hülse eingebrachten Zustand verbessert werden.

Zur **Lösung** eingangs genannter Aufgabe wird ferner ein Fahrzeug, insbesondere ein Lastkraftwagen, vorgeschlagen, mit einer Ladefläche und einer an der Ladefläche angeordneten Vorrichtung zur Fixierung eines vorstehend beschriebenen Hubwagens.

Bei dem Fahrzeug können dieselben Vorteile erreicht werden wie sie bereits im Zusammenhang mit der Vorrichtung zur Fixierung eines Hubwagens erläutert worden sind.

Die Plattform der Vorrichtung ist bevorzugt als Teil der Ladefläche vorgesehen. Die Ladefläche kann mit der und den Hülsen der Plattform korrespondierende Durchgangsöffnungen, insbesondere Bohrungen, aufweisen, in welche die Hülse oder Hülsen eingebracht werden können.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

- **Fig. 1**: zeigt ein erstes Ausführungsbeispiel einer erfindungsgemäßen Vorrichtung, wobei in der linken Hälfte die Vorderseite eines Klemmelements und die Oberseite einer Plattform dargestellt ist und in der rechten Hälfte eine Plattform mit Hülse.
- **Fig. 2**: zeigt die Vorrichtung gemäß Fig. 1, wobei die Rückseite des Klemmelements sichtbar ist.
- **Fig. 3**: zeigt die Vorrichtung gemäß Fig. 1 mit dem Klemmelement in einer Seitenansicht.
- **Fig. 4**: zeigt die Vorrichtung gemäß Fig. 1, wobei das Klemmelement in die Hülse der Plattform eingebracht ist.
- **Fig. 5**: zeigt die Vorrichtung gemäß Fig. 1, wobei ein Hubwagen durch die Vorrichtung fixiert ist.
- **Fig. 6**: zeigt ein zweites Ausführungsbeispiel einer erfindungsgemäßen Vorrichtung.
- **Fig. 7**: zeigt ein drittes Ausführungsbeispiel einer erfindungsgemäßen Vorrichtung mit einem als Doppelkreuz ausgebildeten Klemmelement.
- **Fig. 8**: zeigt ein viertes Ausführungsbeispiel einer erfindungsgemäßen Vorrichtung in einer perspektivischen Ansicht.
- **Fig. 9**: zeigt die Vorrichtung nach Fig. 7 in einer Schnittdarstellung.
- **Fig. 10**: zeigt ein fünftes Ausführungsbeispiel einer erfindungsgemäßen Vorrichtung in einer perspektivischen Ansicht.
- **Fig. 11**: zeigt ein sechstes Ausführungsbeispiel einer erfindungsgemäßen Vorrichtung in einer perspektivischen Ansicht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

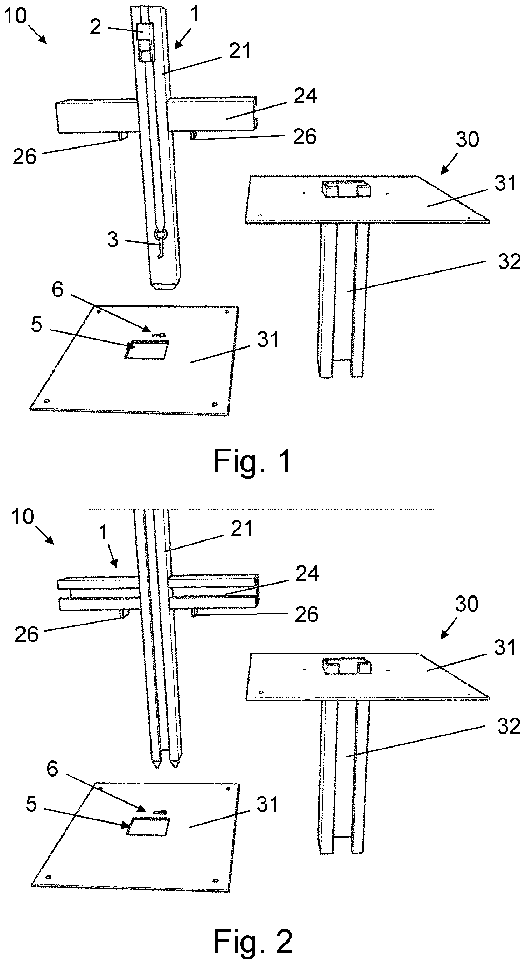

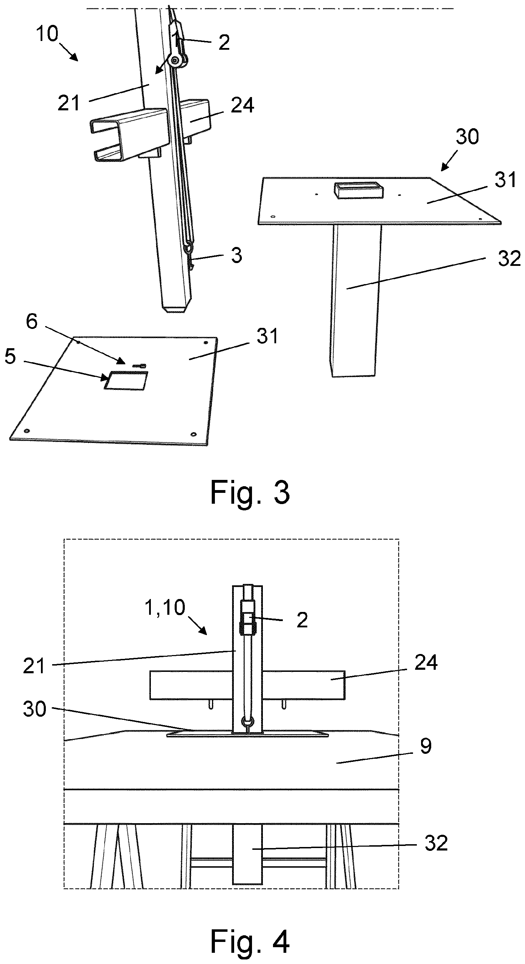

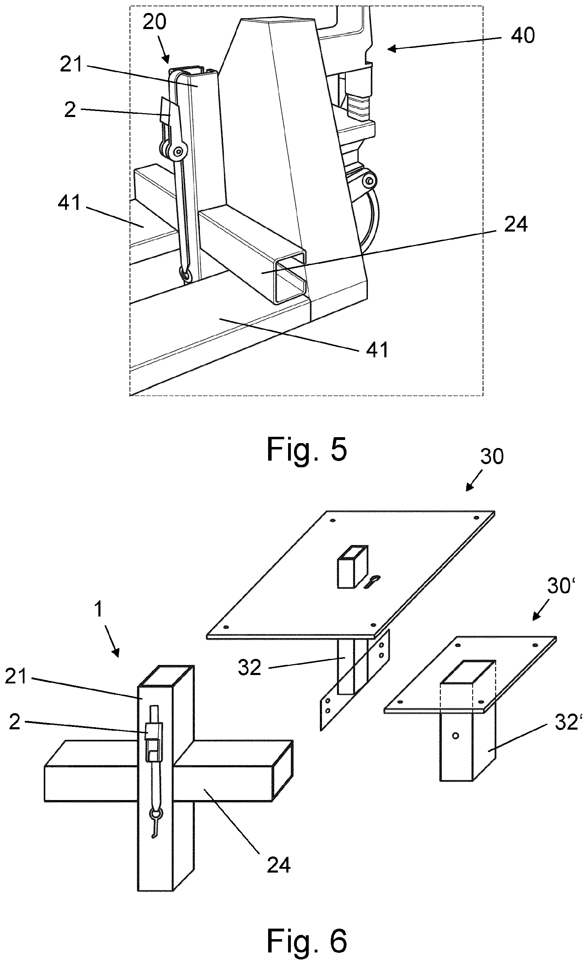

In **Fig. 1 bis 5** ist ein erstes Ausführungsbeispiel einer erfindungsgemäßen Vorrichtung 10 zur Fixierung eines mindestens zwei Gabelzinken 41 aufweisenden Hubwagens 40 dargestellt. Die Vorrichtung 10 umfasst eine Plattform 30 und ein - hier als metallenes Kreuzgebilde bzw. metallene Kreuzvorrichtung ausgebildetes - Klemmelement 1, durch welches die Gabelzinken 41 des Hubwagens 40 mit einer Druckkraft in Richtung der Plattform 30 beaufschlagt werden können, um den Hubwagen 40 zu fixieren, vgl. Fig. 5. Die Plattform 30 umfasst eine erste Hülse 32 zur Führung des Klemmelements 20, die als Steckhülse ausgebildet ist. Ein weiterer Bestandteil der Vorrichtung 10 ist eine erste Verzurreinrichtung 2 zum Verzurren des Klemmelements 20 an der Plattform 30, die bei dem Ausführungsbeispiel als Gurtknarre ausgebildet ist.

Der Hubwagen wird dabei auf eine mit einer quadratischen Steckhülse versehen Plattform gefahren. Die Steckhülse weist dabei zwei Öffnungen auf. Nachdem der Hubwagen nun über die Plattform gefahren wird uns sich die Hülse zwischen den beiden Armen des Wagens befindet, wird in die Hülse nun die kreuzförmige Vorrichtung eingelassen.

Am Gurt ist ein Sicherungshaken befestigt, der nun in die zweite Öffnung der Steckhülse gesteckt und verspannt wird. Dieser sichert zusammen mit dem Gewicht des Kreuzes den Hubwagen vor dem Wegrollen beim Transport.

Die erste Öffnung der Hülse 32 ist in den Darstellungen mit dem Bezugszeichen 5 bezeichnet. Die zweite Öffnung, in welche der Sicherungshaken der Verzurreinrichtung 2 eingebracht werden kann, ist in den Darstellungen mit dem Bezugszeichen 6 bezeichnet.

Wie den Darstellungen in Fig. 1 bis 5 weiter entnommen werden kann, umfasst das Klemmelement 1 einen ersten Längsbalken 21 zum Einbringen in die erste Hülse 32 der Plattform 30 und einen senkrecht zu dem ersten Längsbalken 21 und fest mit dem ersten Längsbalken 21 verbundenen ersten Querbalken 24 mit einer Anlagefläche für die Gabelzinken 41 des Hubwagens 40. Der erste Querbalken 24 weist zwei Anschläge 26 für die Gabelzinken 41 des Hubwagens 40 auf.

Die Plattform 30 der Vorrichtung 10 umfasst neben der Hülse 32 zusätzlich eine Platte 31. Die Platte 31 ist mit der Hülse fest verbunden, beispielsweise geschweißt. In der Platte 31 können Bohrungen zur Anbindung der Plattform 30 an die Ladefläche 9 vorhanden sein.

In **Fig. 6** ist ein zweites Ausführungsbeispiel einer erfindungsgemäßen Vorrichtung zur Fixierung eines mindestens zwei Gabelzinken aufweisenden Hubwagens dargestellt.

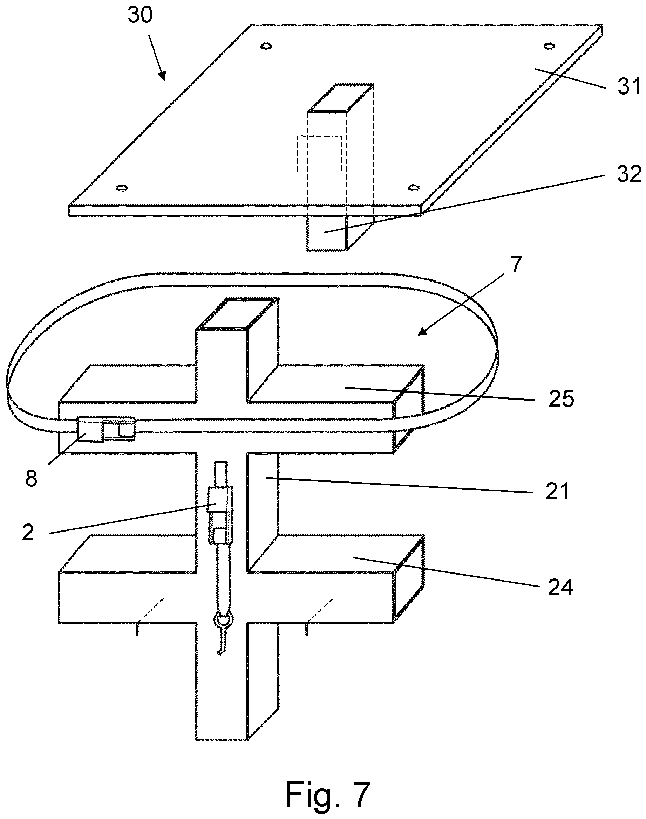

Die **Fig. 7** zeigt ein drittes Ausführungsbeispiel einer erfindungsgemäßen Vorrichtung 10 zur Fixierung eines mindestens zwei Gabelzinken 41 aufweisenden Hubwagens 40. Diese Vorrichtung entspricht im Wesentlichen der Vorrichtung gemäß dem ersten Ausführungsbeispiel mit dem Unterschied, dass das Klemmelement als Doppelkreuz bzw. Doppelkreuzgebilde 7 ausgestaltet ist.

Das Klemmelement 20 umfasst einen senkrecht zu dem ersten Längsbalken 21 und fest mit dem ersten Längsbalken 21 verbundenen zweiten Querbalken 25, welcher oberhalb des ersten Querbalkens 24 an dem ersten Längsbalken 21 angeordnet ist. An dem zweiten Querbalken 25 ist eine zweite Verzurreinrichtung 8 zum Verzurren des Hubwagens 40 an dem zweiten Querbalken 25 angeordnet.

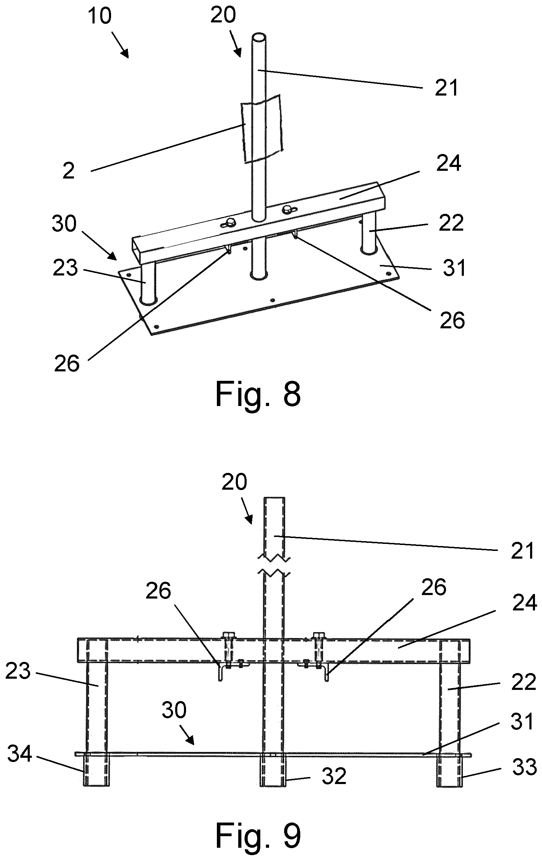

Die Darstellungen in **Fig. 8 und 9** zeigen ein viertes Ausführungsbeispiel einer erfindungsgemäßen Vorrichtung 10 zur Fixierung eines mindestens zwei Gabelzinken 41 aufweisenden Hubwagens 40. Die Vorrichtung 10 gemäß diesem Ausführungsbeispiel umfasst eine Plattform 30 und ein Klemmelement 20, welches mehrere Längsbalken 21, 22, 23 und genau einen Querbalken 24 aufweist. Die Plattform 30 weist gemäß diesem Ausführungsbeispiel mehrere Hülsen 32, 33, 34 auf, wobei jeweils eine Hülse 32, 33, 34 für genau einen Längsbalken 21, 22, 23 vorgesehen ist. Die Verzurreinrichtung 2 der Vorrichtung gemäß diesem Ausführungsbeispiel ist schematisch dargestellt und ermöglicht ein Verzurren des Klemmelements 20 an der Plattform 30.

An dem der unteren, ersten Querbalken 24 sind zwei Anschläge 26 für die Gabelzinken 41 des Hubwagens 40 vorgesehen.

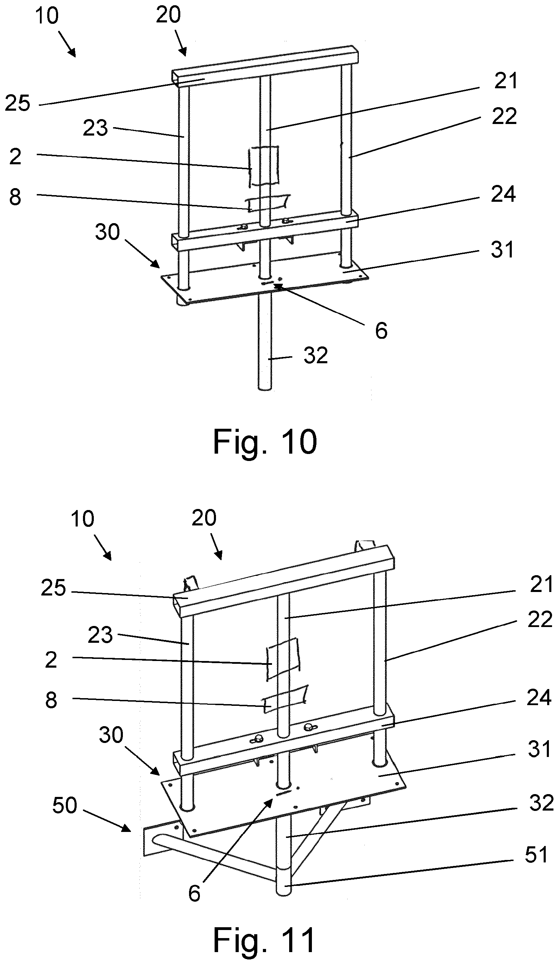

In **Fig. 10** ist ein fünftes Ausführungsbeispiel einer erfindungsgemäßen Vorrichtung zur Fixierung eines mindestens zwei Gabelzinken aufweisenden Hubwagens dargestellt. Diese Vorrichtung entspricht im Wesentlichen der Vorrichtung gemäß dem vierten Ausführungsbeispiel mit dem Unterschied, dass das Klemmelement 1 einen senkrecht zu dem ersten Längsbalken 21 und fest mit dem ersten Längsbalken 21 verbundenen zweiten Querbalken 25 umfasst, der oberhalb des ersten Querbalkens 24 an dem ersten Längsbalken 21 angeordnet ist dass an dem zweiten Querbalken 25 eine zweite Verzurreinrichtung 8 zum Verzurren des Hubwagens 40 an dem zweiten Querbalken 25 angeordnet ist.

In **Fig. 11** ist ein sechstes Ausführungsbeispiel einer erfindungsgemäßen Vorrichtung 10 zur Fixierung eines mindestens zwei Gabelzinken 41 aufweisenden Hubwagens 40 dargestellt. Diese Vorrichtung 10 entspricht im Wesentlichen der Vorrichtung 10 gemäß dem vierten Ausführungsbeispiel mit dem Unterschied, dass unterhalb der Plattform 30 und separat von dieser angeodnet eine Zusatzhalterung 50 mit einer Zusatzhülse 51 zum Einbringen des ersten Längsbalkens 21 vorgesehen ist.

Die Vorrichtungen 10 gemäß den vorstehend erläuterten Ausführungsbeispielen ermöglichen das Fixieren eines Hubwagens 40 mit wenigen Handgriffen.

### Bezugszeichenliste

- 1: Klemmelement, Kreuzgebilde
- 2: Verzurreinrichtung, Gurtknarre
- 3: Sicherungshaken
- 5: große Öffnung passgenau mit dem Kreuzgebilde
- 6: kleine Öffnung passgenau mit dem Sicherungshaken
- 7: Doppelkreuzgebilde
- 8: Verzurreinrichtung, Gurtknarre
- 9: Ladefläche
- 10: Vorrichtung zur Fixierung eines Hubwagens
- 20: Klemmelement
- 21: Längsbalken
- 22: Längsbalken
- 23: Längsbalken
- 24: Querbalken
- 25: Querbalken
- 26: Anschlag

- 30, 30': Plattform
- 31: Platte
- 32, 32': Hülse
- 33: Hülse
- 34: Hülse

- 40: Hubwagen
- 41: Gabelzinke

## Patentansprüche

1. Vorrichtung (10) zur Fixierung eines mindestens zwei Gabelzinken (41) aufweisenden Hubwagens (40)
mit einer Plattform (30) und
mit einem, insbesondere kreuzförmigen, Klemmelement (1, 7, 20) zur Beaufschlagung der Gabelzinken (41) des Hubwagens (40) mit einer Druckkraft in Richtung der Plattform (30),
wobei die Plattform (30) eine erste Hülse (32), insbesondere einer Steckhülse, zur Führung des Klemmelements (1, 7, 20) aufweist, **gekennzeichnet durch**
eine erste Verzurreinrichtung (2), insbesondere eine Gurtknarre, zum Verzurren des Klemmelements (1, 7, 20) an der Plattform (30).

2. Vorrichtung nach Anspruch 1, **dadurch gekennzeichnet, dass** das Klemmelement als Kreuzgebilde (1) oder als Doppelkreuz (7) ausgestaltet ist.

3. Vorrichtung nach einem der vorhergehenden Ansprüche, **dadurch gekennzeichnet, dass** das Klemmelement (1, 7, 20)
einen ersten Längsbalken (21) zum Einbringen in die erste Hülse (32) der Plattform (30) und
einen senkrecht zu dem ersten Längsbalken (21) und fest mit dem ersten Längsbalken (21) verbundenen ersten Querbalken (24) mit einer Anlagefläche für die Gabelzinken (41) des Hubwagens (40) umfasst.

4. Vorrichtung nach Anspruch 3, **dadurch gekennzeichnet, dass** der erste Querbalken (24) mindestens einen, bevorzugt zwei, Anschläge (26) für die Gabelzinken (41) des Hubwagens (40) aufweist.

5. Vorrichtung nach einem der Ansprüche 3 oder 4, **dadurch gekennzeichnet, dass** das Klemmelement (20) einen senkrecht zu dem ersten Längsbalken (21) und fest mit dem ersten Längsbalken (21) verbundenen zweiten Querbalken (25) umfasst, wobei der zweite Querbalken (25) bevorzugt oberhalb des ersten Querbalkens (24) an dem ersten Längsbalken (21) angeordnet ist.

6. Vorrichtung nach Anspruch 5, **dadurch gekennzeichnet, dass** an dem zweiten Querbalken (25) eine zweite Verzurreinrichtung (8) zum Verzurren des Hubwagens (40) an dem zweiten Querbalken (25) angeordnet ist.

7. Vorrichtung nach einem der vorhergehenden Ansprüche, **dadurch gekennzeichnet, dass** das Klemmelement (20) einen zweiten Längsbalken (22) aufweist, der fest mit dem ersten Querbalken (24) und dem ggf. vorhandenen zweiten Querbalken (25) verbunden ist, wobei das Klemmelement (20) bevorzugt einen dritten Längsbalken (23) aufweist, der fest mit dem ersten Querbalken (24) und dem ggf. vorhandenen zweiten Querbalken (25) verbunden ist.

8. Vorrichtung nach Anspruch 7, **dadurch gekennzeichnet, dass** die Plattform (30) eine zweite Hülse (33) zum Einbringen des zweiten Längsbalkens (22) umfasst, wobei die Plattform (30) bevorzugt eine dritte Hülse (34) zum Einbringen des dritten Längsbalkens (34) umfasst.

9. Vorrichtung nach einem der vorhergehenden Ansprüche, **gekennzeichnet durch** eine unterhalb der Plattform (30) separat von der Plattform (30) anordbare Zusatzhalterung (50) mit einer Zusatzhülse (51) zum Einbringen des ersten Längsbalkens (21).

10. Fahrzeug, insbesondere Lastkraftwagen, mit einer Ladefläche und einer an der Ladefläche (9) angeordneten Vorrichtung (10) zur Fixierung eines Hubwagens (40) nach einem der vorhergehenden Ansprüche.

## Claims

1. Device (10) for fixing a lift truck (40) which has at least two fork tines (41),
having a platform (30) and
having an, in particular cross-shaped, clamping element (1, 7, 20) for applying a compressive force to the fork tines (41) of the lift truck (40) in the direction of the platform (30),
wherein the platform (30) has a first sleeve (32), in particular a plug sleeve, for guiding the clamping element (1, 7, 20), **characterized by** a first lashing device (2), in particular a belt ratchet, for lashing the clamping element (1, 7, 20) on the platform (30).

2. Device according to Claim 1, **characterized in that** the clamping element is configured as a cross structure (1) or as a double cross (7).

3. Device according to either of the preceding claims, **characterized in that** the clamping element (1, 7, 20) comprises
a first longitudinal beam (21) for introducing into the first sleeve (32) of the platform (30) and
a first transverse beam (24) which is connected perpendicularly to the first longitudinal beam (21) and fixedly to the first longitudinal beam (21) and which has a bearing surface for the fork tines (41) of the lift truck (40).

4. Device according to Claim 3, **characterized in that** the first transverse beam (24) has at least one, preferably two, stops (26) for the fork tines (41) of the lift truck (40).

5. Device according to either of Claims 3 and 4, **characterized in that** the clamping element (20) comprises a second transverse beam (25) which is connected perpendicularly to the first longitudinal beam (21) and fixedly to the first longitudinal beam (21), wherein the second transverse beam (25) is preferably arranged on the first longitudinal beam (21) above the first transverse beam (24).

6. Device according to Claim 5, **characterized in that** a second lashing device (8) for lashing the lift truck (40) on the second transverse beam (25) is arranged on the second transverse beam (25).

7. Device according to one of the preceding claims, **characterized in that** the clamping element (20) has a second longitudinal beam (22) which is fixedly connected to the first transverse beam (24) and to the possibly present second transverse beam (25), wherein the clamping element (20) preferably has a third longitudinal beam (23) which is fixedly connected to the first transverse beam (24) and to the possibly present second transverse beam (25).

8. Device according to Claim 7, **characterized in that** the platform (30) comprises a second sleeve (33) for introducing the second longitudinal beam (22), wherein the platform (30) preferably comprises a third sleeve (34) for introducing the third longitudinal beam (34).

9. Device according to one of the preceding claims, **characterized by** an additional holder (50) which can be arranged below the platform (30) separately from the platform (30) and which has an additional sleeve (51) for introducing the first longitudinal beam (21) .

10. Vehicle, in particular lorry, having a loading surface and, arranged on the loading surface (9), a device (10) for fixing a lift truck (40) according to one of the preceding claims.

## Revendications

1. Dispositif (10) pour fixer un chariot élévateur (40) présentant au moins deux bras de fourche (41),
avec une plate-forme (30) et
avec un élément de serrage (1, 7, 20), notamment en forme de croix, pour appliquer une force de pression aux bras de fourche (41) du chariot élévateur (40) en direction de la plate-forme (30),
la plate-forme (30) présentant une première douille (32), notamment une douille enfichable, pour guider l'élément de serrage (1, 7, 20), **caractérisé par**
un premier appareil d'arrimage (2), notamment un cliquet à sangle, pour arrimer l'élément de serrage (1, 7, 20) à la plate-forme (30).

2. Dispositif selon la revendication 1, **caractérisé en ce que** l'élément de serrage est conçu sous forme de structure en croix (1) ou sous forme de double croix (7).

3. Dispositif selon l'une quelconque des revendications précédentes, **caractérisé en ce que** l'élément de serrage (1, 7, 20) comprend
une première barre longitudinale (21) à insérer dans la première douille (32) de la plate-forme (30) et
une première barre transversale (24) perpendiculaire à la première barre longitudinale (21) et reliée de manière fixe à la première barre longitudinale (21), avec une surface d'appui pour les bras de fourche (41) du chariot élévateur (40).

4. Dispositif selon la revendication 3, **caractérisé en ce que** la première barre transversale (24) présente au moins une, de préférence deux, butées (26) pour les bras de fourche (41) du chariot élévateur (40).

5. Dispositif selon l'une quelconque des revendications 3 ou 4, **caractérisé en ce que** l'élément de serrage (20) comprend une deuxième barre transversale (25) perpendiculaire à la première barre longitudinale (21) et reliée de manière fixe à la première barre longitudinale (21), la deuxième barre transversale (25) étant de préférence agencée au-dessus de la première barre transversale (24) sur la première barre longitudinale (21).

6. Dispositif selon la revendication 5, **caractérisé en ce qu'**un deuxième appareil d'arrimage (8) est agencé sur la deuxième barre transversale (25) pour arrimer le chariot élévateur (40) à la deuxième barre transversale (25) .

7. Dispositif selon l'une quelconque des revendications précédentes, **caractérisé en ce que** l'élément de serrage (20) présente une deuxième barre longitudinale (22) qui est reliée de manière fixe à la première barre transversale (24) et à la deuxième barre transversale (25) éventuellement présente, l'élément de serrage (20) présentant de préférence une troisième barre longitudinale (23) qui est reliée de manière fixe à la première barre transversale (24) et à la deuxième barre transversale (25) éventuellement présente.

8. Dispositif selon la revendication 7, **caractérisé en ce que** la plate-forme (30) comprend une deuxième douille (33) pour insérer la deuxième barre longitudinale (22), la plate-forme (30) comprenant de préférence une troisième douille (34) pour insérer la troisième barre longitudinale (34).

9. Dispositif selon l'une quelconque des revendications précédentes, **caractérisé par** un support supplémentaire (50) pouvant être agencé sous la plate-forme (30), séparément de la plate-forme (30), avec une douille supplémentaire (51) pour insérer la première barre longitudinale (21).

10. Véhicule, notamment camion, avec une surface de chargement et un dispositif (10) pour fixer un chariot élévateur (40) selon l'une quelconque des revendications précédentes, agencé sur la surface de chargement (9).
